# EUROPEAN PATENT APPLICATION

(11) **EP 4 696 891 A1**
(43) Date of publication of application: **18.02.2026**
(21) Application number: 24788602.1
(22) Date of filing: 29.03.2024
(51) Int. Cl.: F04C 18/02, F16C 17/04, F16C 33/10

(54) **SLIDING COMPONENT**

(30) Priority: 14.04.2023 JP 2023066441; 31.07.2023 JP 2023124836
(71) Applicant: Eagle Industry Co., Ltd., Tokyo 105-8587 (JP)
(72) Inventor: SUZUKI, Hiroshi, Tokyo 105-8587 (JP); MAKISHIMA, So, Tokyo 105-8587 (JP)
(74) Representative: WSL Patentanwälte Partnerschaft mbB
(86) International application number: PCT/JP2024/013215
(87) International publication number: WO 2024/214575

(57) **Abstract**

There are provided sliding components capable of stably reducing the frictional resistance of sliding surfaces that undergoes eccentric rotation. In sliding components consist of a fixed component 8 and an orbiting component 7 which have sliding surfaces that slide relative to each other as the sliding surfaces undergo eccentric rotation, at least one of a sliding surface 8a of the fixed component 8 and a sliding surface 7a of the orbiting component 7 has pressure generation regions 80 and 81 where pressures are generated during relative rotation due to the eccentric rotation.

## Description

### {TECHNICAL FIELD}

The present invention relates to sliding components, particularly to sliding components used in a rotating machine including an eccentric mechanism.

### {BACKGROUND ART}

Machines used in various industrial fields that are rotationally driven include not only a rotating machine in which a central shaft rotates while being held in a fixed position but also a rotating machine that a central shaft rotates eccentrically. One example of a rotating machine that rotates eccentrically is a scroll compressor or the like, and this type of compressor includes a scroll compression mechanism composed of a fixed scroll including a spiral wrap on a surface of an end plate and a movable scroll including a spiral wrap on a surface of an end plate, an eccentric mechanism for eccentrically rotating a rotating shaft, and the like, and pressurizes a fluid supplied from a low-pressure chamber on an outer diameter side of both the scrolls and discharges the high-pressure fluid from a discharge hole, which is formed at the center of the fixed scroll, by causing the movable scroll to slide relative to the fixed scroll while eccentrically rotating the movable scroll due to the rotation of the rotating shaft.

Since the scroll compressor that uses the mechanism for causing the movable scroll to slide relative to the fixed scroll while eccentrically rotating the movable scroll not only has high compression efficiency but also is low noise, the scroll compressor is widely used in, for example, a refrigeration cycle and the like; however, leakage of the fluid from an axial gap between both the scrolls occurs, which is a problem. A scroll compressor described in Patent Citation 1 includes a thrust plate that slides relative to a movable scroll on a back surface side of the movable scroll, and can reduce leakage of a refrigerant from an axial gap between both the movable scroll and a fixed scroll during compression of the refrigerant by supplying a portion of the refrigerant compressed by a scroll compression mechanism to a back pressure chamber, which is formed on a back surface side of the thrust plate, to press the movable scroll toward the fixed scroll.

### {CITATION LIST}

### {Patent Literature}

Patent Citation 1: JP 2016-61208 A (Pages 5 and 6, FIG. 1)

### {SUMMARY OF INVENTION}

### {Technical Problem}

However, in the scroll compressor described in Patent Citation 1, since a portion of the refrigerant compressed by the scroll compression mechanism is used to press the movable scroll from the back surface side toward the fixed scroll via the thrust plate, leakage of the refrigerant from the axial gap between both the scrolls can be reduced; however, since pressing forces from both axial sides act between both the scrolls, particularly on sliding surfaces where the movable scroll and the thrust plate undergo eccentric rotation, the frictional resistance increases, so that smooth operation of the movable scroll is hindered and the compression efficiency is not improved, which is a problem.

The present invention has been made in view of such problems, and an object of the present invention is to provide Sliding components capable of stably reducing the frictional resistance of sliding surfaces that undergo eccentric rotation.

### {Solution to Problem}

In order to solve the foregoing problems, sliding components according to the present invention is sliding components consisting of a fixed component and an orbiting component which have sliding surfaces that slide relative to each other as the sliding surfaces undergo eccentric rotation, wherein at least one of the sliding surface of the fixed component and the sliding surface of the orbiting component has at least one pressure generation region where pressure is generated during relative rotation due to the eccentric rotation. According to the aforesaid feature of the present invention, the fixed component and the orbiting component can be separated from each other by the pressure generated during relative rotation. Therefore, the sliding components can stably reduce the frictional resistance of the sliding surfaces that undergo eccentric rotation.

It may be preferable that the pressure generation region is formed by pressure generation grooves disposed at distances from each other in a circumferential direction. According to this preferable configuration, in the sliding components, portions where pressure is generated and portions where no pressure is generated can be provided in the pressure generation region in the circumferential direction. Therefore, pressure can be stably generated by a fluid as the sliding components undergoes eccentric rotation.

It may be preferable that an area of the pressure generation groove that generates positive pressure is larger than an area of the pressure generation groove that generates negative pressure, on a straight line passing through two centers of the fixed component and the orbiting component at a location where two sliding surfaces overlap each other. According to this preferable configuration, positive pressure is generated across the entirety of the sliding surfaces, so that the friction of the sliding surfaces can be reduced and sliding can be satisfactorily performed.

It may be preferable that a plurality of the pressure generation regions are formed in a radial direction. According to this preferable configuration, positive pressure and negative pressure can be generated at any phase, and the entirety of the sliding components can be adjusted not to excessively tilt.

It may be preferable that the pressure generation region includes the pressure generation groove communicating with an inner diameter space, and the pressure generation groove communicating with an outer diameter space. According to this preferable configuration, the sliding components can more efficiently generate pressure by utilizing the fluid inside and outside the sliding components.

It may be preferable that the pressure generation groove communicating with the inner diameter space extends in a direction opposite the pressure generation groove, which communicates with the outer diameter space, in the circumferential direction. According to this preferable configuration, the sliding components can generate relative positive pressure in one of the pressure generation groove extending toward one side in the circumferential direction with a location where the pressure generation groove communicates with the inner diameter space as a base end and the pressure generation groove extending toward the other side in the circumferential direction with a location where the pressure generation groove communicates with the outer diameter space as a base end, the pressure generation grooves being adjacent to each other, and generate relative negative pressure in the other. Therefore, the sliding components can reduce the occurrence of excessive tilt and leakage.

It may be preferable that the pressure generation groove communicating with the inner diameter space and the pressure generation groove communicating with the outer diameter space generate different amounts of pressure. According to this preferable configuration, the sliding components can more reliably reduce the occurrence of excessive tilt and leakage while reliably separating the fixed component and the orbiting component from each other.

### {BRIEF DESCRIPTION OF DRAWINGS}

FIG. 1 is a schematic configuration view illustrating a scroll compressor to which sliding components according to a first embodiment of the present invention is applied.
FIG. 2 is a schematic view illustrating a sliding surface of a fixed component in the first embodiment of the present invention.
FIG. 3 is a view for describing a sliding state between the fixed component and an orbiting component in the first embodiment.
FIG. 4 is a view for describing a sliding state between the fixed component and the orbiting component when a rotating shaft has rotated eccentrically by 90 degrees from FIG. 3.
FIG. 5 is a view for describing a sliding state between the fixed component and the orbiting component when the rotating shaft has rotated eccentrically by 180 degrees from FIG. 3.
FIG. 6 is a view for describing a sliding state between the fixed component and the orbiting component when the rotating shaft has rotated eccentrically by 270 degrees from FIG. 3.
FIG. 7 is a view for describing a modification example of a pressure generation groove.
FIG. 8 is a view for describing a sliding state between a fixed component and an orbiting component as sliding components according to a second embodiment of the present invention.
FIG. 9 is a view for describing a sliding state between a fixed component and an orbiting component as sliding components according to a third embodiment of the present invention.
FIG. 10 is a schematic view illustrating a sliding surface of a fixed component a one of sliding components according to a fourth embodiment of the present invention.
FIG. 11 is a view for describing a pressure generation groove in the fourth embodiment of the present invention.
FIG. 12 is a view for describing a sliding state between a fixed component and an orbiting component as sliding components according to a fifth embodiment of the present invention.
FIG. 13 is a view for describing a sliding state between a fixed component and an orbiting component as sliding components according to a sixth embodiment of the present invention.

### {DESCRIPTION OF EMBODIMENTS}

Modes for implementing sliding components according to the present invention will be described below based on embodiments.

### {First embodiment}

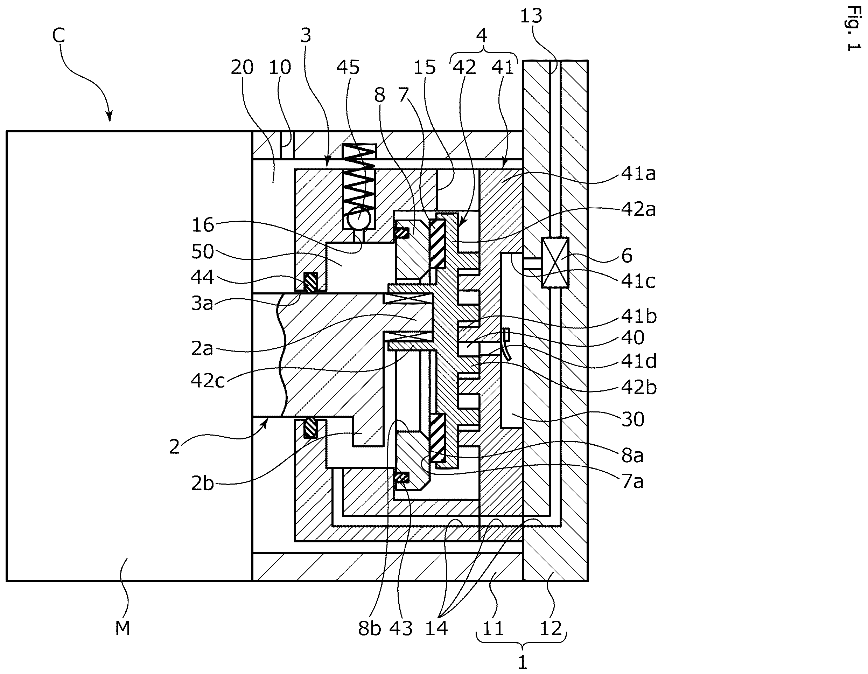

Sliding components according to a first embodiment of the present invention will be described with reference to FIGS. 1 to 7.

The sliding components according to the first embodiment is applied to a rotating machine including an eccentric mechanism, for example, a scroll compressor C that takes in, compresses, and discharges a refrigerant serving as a fluid used in air conditioning systems for automobiles and the like. Incidentally, in the present embodiment, the refrigerant is a gas, and is mixed with a mist of lubricating oil.

First, the scroll compressor C will be described. As illustrated in FIG. 1, the scroll compressor C is mainly composed of a housing 1, a rotating shaft 2, an inner casing 3, a scroll compression mechanism 4, an orbiting component 7 constituting a thrust bearing serving as a sliding component, a fixed component 8 constituting the thrust bearing, and a drive motor M.

The housing 1 is composed of a casing 11 having a cylindrical shape, and a cover 12 that closes an opening of the casing 11. An opening of the casing 11 on the side opposite the opening, which is closed by the cover 12, in an axial direction is closed by the drive motor M.

Inside the casing 11, a low-pressure chamber 20 serving as an external space on a low-pressure side to which low-pressure refrigerant is supplied from a refrigerant circuit (not illustrated) through an intake port 10, a high-pressure chamber 30 from which high-pressure refrigerant compressed by the scroll compression mechanism 4 is discharged, and a back pressure chamber 50 serving as an external space on a high-pressure side to which a portion of the refrigerant compressed by the scroll compression mechanism 4 is supplied together with the lubricating oil are formed. Incidentally, the back pressure chamber 50 is formed inside the inner casing 3 having a cylindrical shape that is accommodated inside the casing 11.

A discharge communication passage 13 communicating between the refrigerant circuit (not illustrated) and the high-pressure chamber 30 is formed in the cover 12. In addition, a part of a back pressure communication passage 14 communicating between the high-pressure chamber 30 and the back pressure chamber 50 is formed in the cover 12 by branching off from the discharge communication passage 13. Incidentally, an oil separator 6 that separates the lubricating oil from the refrigerant is provided in the discharge communication passage 13.

The inner casing 3 is fixed in a state where an axial end portion of the inner casing 3 is in contact with an end plate 41a of a fixed scroll 41 constituting the scroll compression mechanism 4. In addition, an intake communication passage 15 is formed in a side wall of the inner casing 3 so as to penetrate therethrough in a radial direction. Namely, the low-pressure chamber 20 is formed from the outside of the inner casing 3 to the inside of the inner casing 3 via the intake communication passage 15. The refrigerant supplied to the inside of the inner casing 3 through the intake communication passage 15 is taken into the scroll compression mechanism 4.

In addition, a through-hole 3a is formed at a radial center of the inner casing 3. The through-hole 3a is formed with a diameter that allows the eccentric rotation of an eccentric portion 2a and a counterweight portion 2b of the rotating shaft 2.

The scroll compression mechanism 4 is mainly composed of the fixed scroll 41 fixed to the cover 12 in a sealed manner, and a movable scroll 42 accommodated inside the inner casing 3.

The fixed scroll 41 is made of metal, and includes a wrap 41b having a spiral shape that protrudes from a front surface of the end plate 41a having a disk shape, namely, from the end plate 41a toward the movable scroll 42. In addition, a recess 41c formed by recessing a back surface of the end plate 41a, namely, an inner diameter side of an end surface of the end plate 41a in a direction opposite the cover 12, the end surface coming into contact with the cover 12, is formed in the fixed scroll 41, and the high-pressure chamber 30 is defined by the recess 41c and the cover 12.

The movable scroll 42 is made of metal, and includes a wrap 42b having a spiral shape that protrudes from a front surface of an end plate 42a having a disk shape, namely, from the end plate 42a toward the fixed scroll 41. In addition, a boss 42c protruding from the center of a back surface of the end plate 42a is formed on the movable scroll 42.

The boss 42c is inserted into the through-hole 3a of the inner casing 3. In addition, the eccentric portion 2a formed on the rotating shaft 2 is inserted into the boss 42c so as to be capable of relative rotation. Incidentally, in the present embodiment, the eccentric portion 2a of the rotating shaft 2 and the counterweight portion 2b protruding from the rotating shaft 2 in a radially outward direction constitute an eccentric mechanism that eccentrically rotates the rotating shaft 2.

When the rotating shaft 2 is rotationally driven by the drive motor M, the eccentric portion 2a rotates eccentrically, and the movable scroll 42 slides relative to the fixed scroll 41 while eccentrically rotating with the posture of the movable scroll 42 with respect to the fixed scroll 41 maintained. At this time, the movable scroll 42 rotates eccentrically with respect to the fixed scroll 41. Along with this rotation, the contact positions of the wraps 41b and 42b move sequentially in a rotation direction, and a compression chamber 40 formed between the wraps 41b and 42b gradually decreases while moving toward the center. As a result, the refrigerant taken into the compression chamber 40 from the low-pressure chamber 20 formed on an outer diameter side of the scroll compression mechanism 4 is compressed, and finally, the high-pressure refrigerant is discharged into the high-pressure chamber 30 through a discharge hole 41d provided at the center of the fixed scroll 41.

In addition, an orifice (not illustrated) is provided in the back pressure communication passage 14. The refrigerant in the high-pressure chamber 30, the pressure of which is reduced and adjusted by the orifice, is supplied to the back pressure chamber 50, together with the lubricating oil separated by the oil separator 6. At this time, the pressure in the back pressure chamber 50 is adjusted to be higher than the pressure in the low-pressure chamber 20. Incidentally, a pressure relief hole 16 penetrating through the inner casing 3 in the radial direction and communicating between the low-pressure chamber 20 and the back pressure chamber 50 is formed in the inner casing 3, and a pressure adjustment valve 45 is provided in the pressure relief hole 16. The pressure adjustment valve 45 opens when the pressure in the back pressure chamber 50 exceeds a set value.

The orbiting component 7 is made of resin, has a rectangular cross-section and an annular shape when viewed in the axial direction, and is fixed to the back surface of the end plate 42a of the movable scroll 42.

A sliding surface 7a that comes into contact with a sliding surface 8a of the fixed component 8 is formed on the orbiting component 7. The sliding surface 7a is a flat surface, and constitutes a back surface-side sliding surface of the movable scroll 42.

The fixed component 8 is made of metal, and has an annular shape. The sliding surface 8a that comes into contact with the sliding surface 7a of the orbiting component 7 is formed on the fixed component 8.

A seal ring 43 that comes into contact with an inner peripheral surface of the inner casing 3 is fixed to a surface of the fixed component 8 on the side opposite the sliding surface 8a in the axial direction. The orbiting component 7 and the fixed component 8 function as a thrust bearing for maintaining smooth operation while receiving the axial load of the movable scroll 42.

In addition, the orbiting component 7, the fixed component 8, and the seal ring 43 partition the low-pressure chamber 20 formed on the outer diameter side of the movable scroll 42 and the back pressure chamber 50 formed on a back surface side of the movable scroll 42 off from each other inside the inner casing 3. The back pressure chamber 50 is formed as a sealed space by sealing a gap between the rotating shaft 2 inserted into the through-hole 3a and the through-hole 3a with a seal ring 44 fixed to an inner periphery of the through-hole 3a of the inner casing 3.

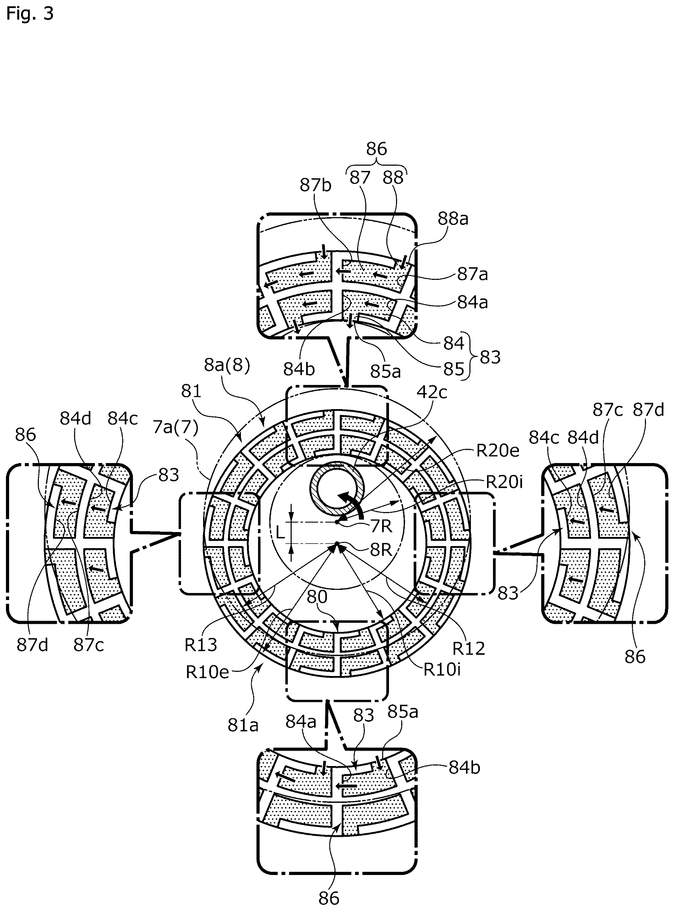

In addition, the boss 42c of the movable scroll 42 is inserted into a through-hole 8b at the center of the fixed component 8. The through-hole 8b is formed with a diameter that allows eccentric rotation through the eccentric portion 2a of the rotating shaft 2 inserted into the boss 42c. Namely, the sliding surface 7a of the orbiting component 7 is slidable relative to the sliding surface 8a of the fixed component 8 while eccentrically rotating due to the eccentric rotation of the rotating shaft 2 (see FIGS. 3 to 6).

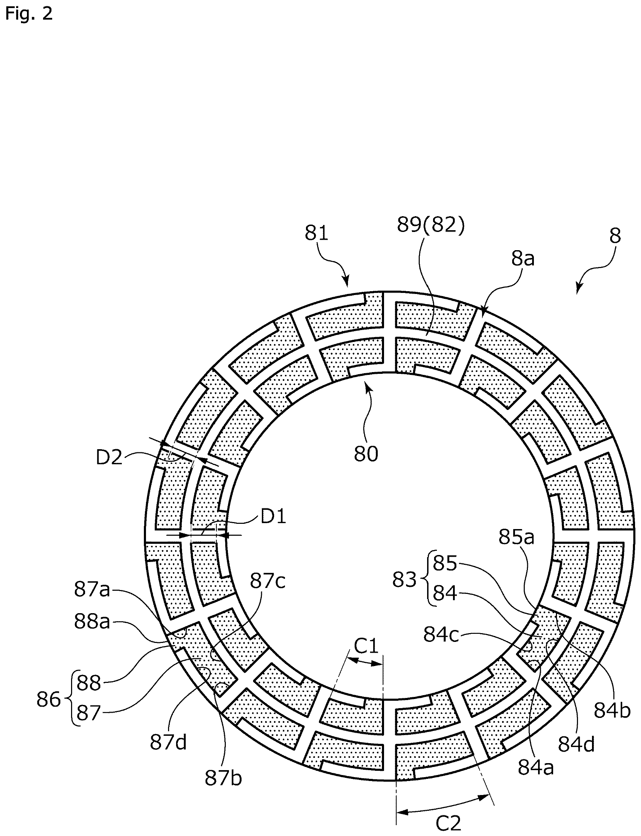

Next, the sliding surface 8a of the fixed component 8 will be described. As illustrated in FIG. 2, the sliding surface 8a of the fixed component 8 is composed of an inner pressure generation region 80 serving as a pressure generation region, an outer pressure generation region 81 serving as a pressure generation region, and a land 82.

The inner pressure generation region 80 is composed of 16 inner pressure generation grooves 83 serving as pressure generation grooves that are evenly spaced apart in a circumferential direction and that communicate with an inner diameter space, and the land 82 that is continuous with outer edges of the inner pressure generation grooves 83.

Each of the inner pressure generation grooves 83 is a groove having a substantially constant depth and a substantially L-shape with an interior angle of substantially 90 degrees, and including an inner circumferential groove 84 and an inner radial groove 85. Namely, each of the inner pressure generation grooves 83 is a groove including the inner circumferential groove 84 that extends toward one side in the circumferential direction with the inner radial groove 85 as a base end. Incidentally, the cross-sectional shape of each of the inner pressure generation grooves 83 is a rectangular shape, but may be a U-shape, a semicircular shape, or a triangular shape, and may be changed as appropriate.

The inner circumferential groove 84 is an arc-shaped groove which extends concentrically with the sliding surface 8a, of which an end 84a on a clockwise side in the circumferential direction is closed, and of which an end 84b on a counterclockwise side in the circumferential direction communicates with the inner radial groove 85. The inner radial groove 85 is a linear groove extending in the radial direction of the sliding surface 8a. An inner diameter end 85a of the inner radial groove 85 communicates with the back pressure chamber 50 serving as an inner diameter space, and an outer diameter end of the inner radial groove 85 communicates with the end 84b of the inner circumferential groove 84 in the radial direction.

The outer pressure generation region 81 is composed of 16 outer pressure generation grooves 86 serving as pressure generation grooves that are evenly spaced apart in the circumferential direction and that extend to an outer diameter space, and the land 82 that is continuous with outer edges of the outer pressure generation grooves 86.

Each of the outer pressure generation grooves 86 is a groove having a substantially constant depth and a substantially L-shape with an interior angle of substantially 90 degrees, and including an outer circumferential groove 87 and an outer radial groove 88. Namely, each of the outer pressure generation grooves 86 is a groove including the outer circumferential groove 87 that extends toward the other side in the circumferential direction with the outer radial groove 88 as a base end. In addition, a depth dimension of the outer pressure generation grooves 86 and a depth dimension of the inner pressure generation grooves 83 are substantially the same. Incidentally, the cross-sectional shape of each of the outer pressure generation grooves 86 is a rectangular shape, but may be a U-shape, a semicircular shape, or a triangular shape, and may be changed as appropriate.

The outer circumferential groove 87 is an arc-shaped groove which extends concentrically with the sliding surface 8a on the outer diameter side of the inner circumferential groove 84, of which an end 87b on the counterclockwise side in the circumferential direction is closed, and of which an end 87a on the clockwise side in the circumferential direction communicates with the outer radial groove 88. The outer radial groove 88 is a linear groove extending in the radial direction of the sliding surface 8a. An outer diameter end 88a of the outer radial groove 88 communicates with the low-pressure chamber 20 serving as an outer diameter space, and an inner diameter end of the outer radial groove 88 communicates with the end 87a of the outer circumferential groove 87 in the radial direction.

In addition, one inner pressure generation groove 83 and one outer pressure generation groove 86 are disposed to overlap each other when viewed in the radial direction. Incidentally, one inner pressure generation groove 83 and one outer pressure generation groove 86 may at least partially overlap each other when viewed in the radial direction, or may not overlap each other, and the disposition may be changed as appropriate.

In more detail, the end 84a of one inner pressure generation groove 83 on the clockwise side in the circumferential direction and the end 87a of one outer pressure generation groove 86 on the clockwise side in the circumferential direction are formed on the same radial line of the sliding surface 8a. In addition, the end 84b of one inner pressure generation groove 83 on the counterclockwise side in the circumferential direction and the end 87b of one outer pressure generation groove 86 on the counterclockwise side in the circumferential direction are formed on the same radial line of the sliding surface 8a. As a result, a circumferential dimension C1 of the inner circumferential groove 84 is shorter than a circumferential dimension C2 of the outer circumferential groove 87 (C1 < C2).

Meanwhile, a radial dimension D1 of the inner circumferential groove 84, namely, a radial dimension from an inner wall surface 84c on the inner diameter side to an outer wall surface 84d on the outer diameter side is substantially the same as a radial dimension D2 of the outer circumferential groove 87, namely, a radial dimension from an inner wall surface 87c to an outer wall surface 87d (D1 = D2).

In addition, a circumferential dimension of the inner radial groove 85 is substantially the same as a circumferential dimension of the outer radial groove 88. A radial dimension of the inner radial groove 85 is substantially the same as a radial dimension of the outer radial groove 88.

Accordingly, a volume of the outer pressure generation groove 86 is larger than a volume of the inner pressure generation groove 83. Incidentally, the volume of the outer pressure generation groove may be set to be larger than the volume of the inner pressure generation groove by setting one or more of the circumferential dimension, the radial dimension, the depth dimension, and the like to be different.

In addition, a portion of the sliding surface 8a other than the inner pressure generation grooves 83 and the outer pressure generation grooves 86 is the land 82 forming a flat surface. The land 82 includes an intermediate land portion 89 which is a region that has a circular shape that is continuous without interruption in the circumferential direction, that is provided between the inner pressure generation region 80 and the outer pressure generation region 81, and that partitions the inner pressure generation region 80 and the outer pressure generation region 81 off from each other.

As illustrated in FIG. 3, an outer diameter of the sliding surface 8a of the fixed component 8 is substantially the same as, specifically, slightly larger than an outer diameter of the sliding surface 7a of the orbiting component 7, whereas an inner diameter of the sliding surface 8a of the fixed component 8 is longer than an inner diameter of the sliding surface 7a of the orbiting component 7. Incidentally, in FIG. 3, the orbiting component 7 is illustrated by a two-dot chain line.

When a radial distance from a center 8R of the fixed component 8 to an inner diameter end of the sliding surface 8a is R10i, and a radial distance from the center 8R to an outer diameter end of the sliding surface 8a is R10e, a radial width of the sliding surface 8a of the fixed component 8 is R10e - R10i.

When a radial distance from a center 7R of the orbiting component 7 to an inner diameter end of the sliding surface 7a is R20i, and a radial distance from the center 7R to an outer diameter end of the sliding surface 7a is R20e, a radial width of the sliding surface 7a of the orbiting component 7 is R20e - R20i.

The radial width R10e - R10i from the inner diameter end to the outer diameter end of the sliding surface 8a is shorter than the radial width R20e - R20i of the sliding surface 7a of the orbiting component 7 (R10e - R10i < R20e - R20i).

In addition, when a radial distance from the center 8R to an outer diameter end of the inner pressure generation region 80 of the fixed component 8 is R12, an eccentricity L of the orbiting component 7 with respect to the fixed component 8, namely, a radial distance from the center 8R of the fixed component 8 to the center 7R of the orbiting component 7 is slightly shorter than a radial width R10e - R12 from the outer diameter end of the sliding surface 8a of the fixed component 8 to the outer wall surface 84d of the inner circumferential groove 84 (L < R10e - R12).

In addition, when a radial distance from the center 8R to an inner diameter end of the outer pressure generation region 81 of the fixed component 8 is R13, the eccentricity L is slightly longer than a radial width R10e - R13 of the outer pressure generation region 81, namely, a dimension from the outer diameter end of the sliding surface 8a of the fixed component 8 to the inner wall surface 87c of the outer circumferential groove 87 (L > R10e - R13).

As a result, a part of the outer pressure generation region 81 does not overlap the sliding surface 7a of the orbiting component 7 in the axial direction, and is exposed to the low-pressure chamber 20 in the radially outward direction beyond the sliding surface 7a. In addition, as the sliding surface 7a rotates eccentrically with respect to the sliding surface 8a of the fixed component 8, the portion of the outer pressure generation region 81 exposed to the low-pressure chamber 20 is gradually displaced (see FIGS. 3 to 6). Incidentally, as long as the configuration allows the formation of a portion of the outer pressure generation region 81 exposed to the low-pressure chamber 20, the eccentricity L may be changed as appropriate; however, one or more pressure generation grooves 83 and 86 need to overlap the region with the radial width R20e - R20i on the sliding surface 7a of the orbiting component 7 at a phase on a +L side to be described later.

As illustrated in FIGS. 3 to 6, the sliding surface 7a of the orbiting component 7 slides relative to the sliding surface 8a of the fixed component 8 due to the rotation of the rotating shaft 2, thereby generating dynamic pressure between the sliding surfaces 7a and 8a. Hereinafter, the dynamic pressure will be described. Incidentally, in this description, in each figure, the inner pressure generation grooves 83 and the outer pressure generation grooves 86 located in a 12 o'clock direction, a 9 o'clock direction, a 6 o'clock direction, and a 3 o'clock direction on the drawing sheet are illustrated in an enlarged manner. In addition, duplicate descriptions will be simplified or omitted.

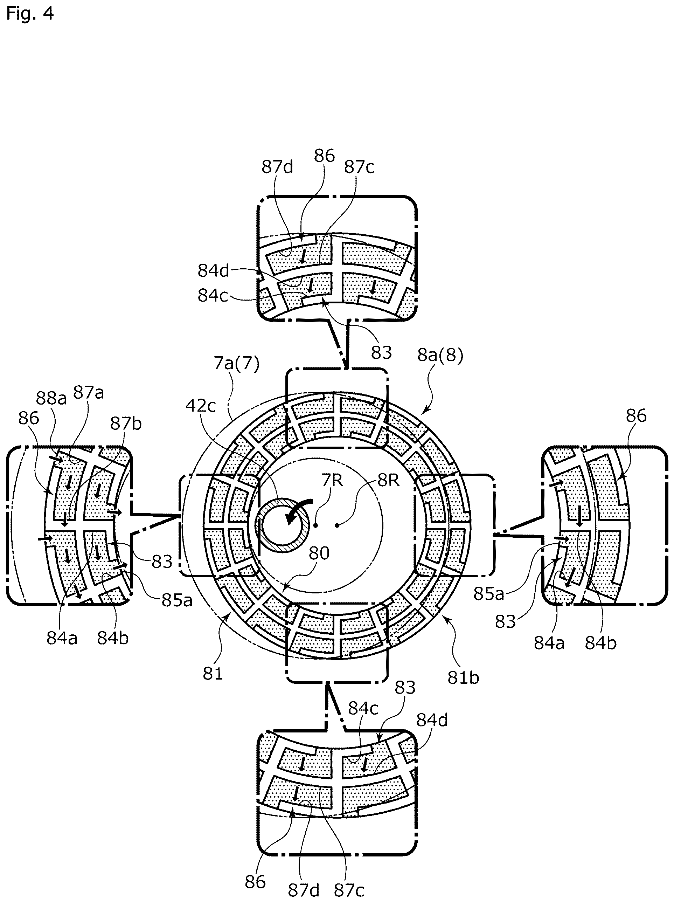

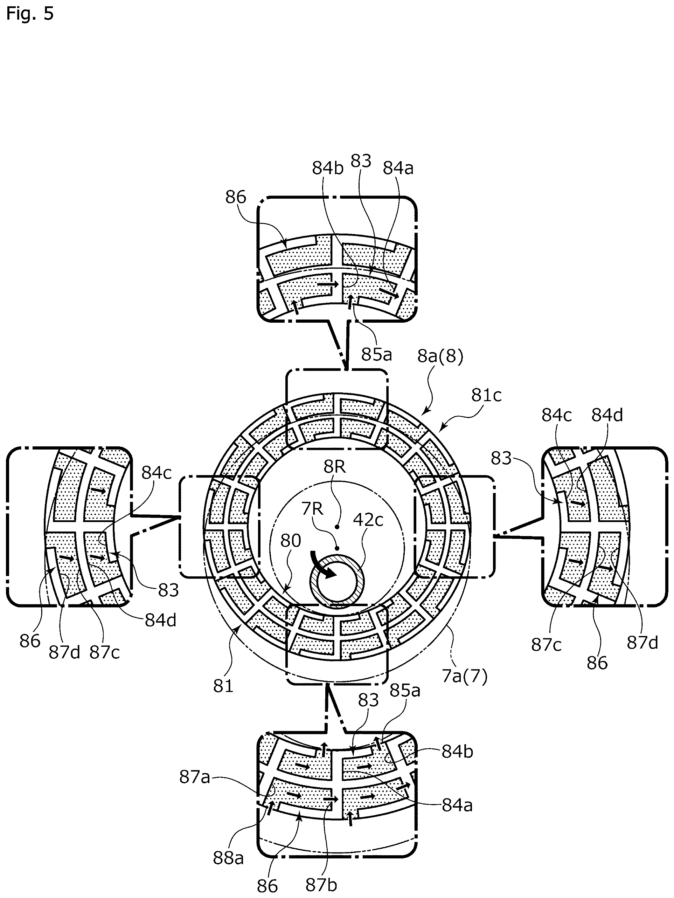

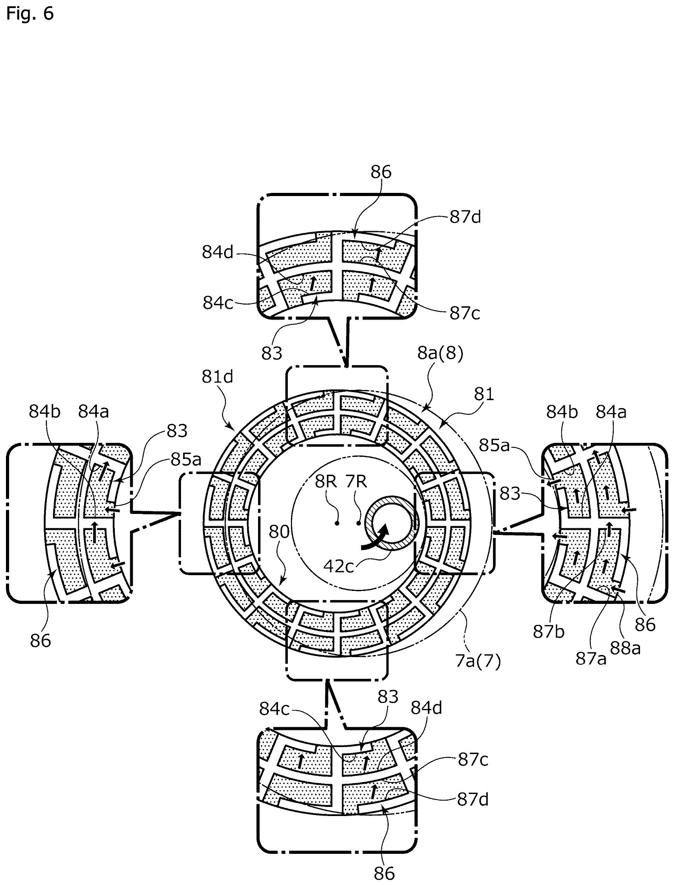

In addition, FIGS. 3 to 6 illustrate states where the boss 42c has rotated by 90 degrees (see FIG. 4), 180 degrees (see FIG. 5), and 270 degrees (see FIG. 6) along a rotation trajectory of the boss 42c indicated by a thick black arrow when viewed from a fixed scroll 41 side, with FIG. 3 serving as a reference for a counterclockwise direction. In addition, for convenience of description, the rotating shaft 2 is not illustrated.

In FIG. 3, as indicated by a thick black arrow, the orbiting component 7 has slid counterclockwise relative to the sliding surface 8a of the fixed component 8 from the state illustrated in FIG. 6. In this state, the orbiting component 7 overlaps the entirety of the inner pressure generation region 80 in the axial direction, and overlaps a portion of the outer pressure generation region 81, which extends from a 3 o'clock position through a 12 o'clock position to a 9 o'clock position, in the axial direction. In detail, in a portion of the outer pressure generation region 81 extending from a substantially 5 o'clock position to the 3 o'clock position and a portion of the outer pressure generation region 81 extending from the 9 o'clock position to a substantially 7 o'clock position, the outer pressure generation region 81 partially overlaps the orbiting component 7; however, for convenience of description, the portions are treated as not overlapping the orbiting component 7. This treatment will be the same hereinafter.

At this time, as indicated by thin black arrows, the fluid in the outer pressure generation groove 86 located in the substantially 12 o'clock direction moves from the end 87a of the outer circumferential groove 87 on the clockwise side in the circumferential direction toward the end 87b on the counterclockwise side in the circumferential direction, and flows out from the end 87a and the vicinity thereof to a gap between the sliding surfaces 7a and 8a, thereby generating positive pressure. In addition, the fluid in the low-pressure chamber 20 is introduced from the outer diameter end 88a of the outer radial groove 88.

In addition, as indicated by thin black arrows, the fluid in the inner pressure generation groove 83 located in the substantially 12 o'clock direction moves from the end 84a of the inner circumferential groove 84 on the clockwise side in the circumferential direction toward the end 84b on the counterclockwise side in the circumferential direction, and is discharged into the back pressure chamber 50 from the inner diameter end 85a through the inner radial groove 85. As a result, relative negative pressure is generated in the inner pressure generation groove 83. The negative pressure increases as the end 84a on the clockwise side in the circumferential direction is approached. Namely, the force that takes in the fluid increases. A suction force that suctions the sliding surface 7a of the orbiting component 7 due to the negative pressure generated in the inner circumferential groove 84 is slightly smaller than a separation force that lifts, namely, separates the sliding surface 7a due to the positive pressure generated in the outer circumferential groove 87.

In addition, as indicated by a thin black arrow, the fluid in the outer circumferential groove 87 of the outer pressure generation groove 86 located in a substantially 9:30 o'clock direction moves from an inner wall surface 87c side toward an outer wall surface 87d side, and is discharged into the low-pressure chamber 20 from the outer diameter end 88a through the outer radial groove 88. As a result, negative pressure is generated in the outer pressure generation groove 86. Since the radial dimension D2 of the outer circumferential groove 87 is shorter than the circumferential dimension C1 of the inner circumferential groove 84 (D2 < C1), the generated negative pressure is significantly smaller than the negative pressure generated in the substantially 12 o'clock direction.

In more detail, in the outer circumferential groove 87, the fluid that has moved from the inner wall surface 87c side toward the outer wall surface 87d side flows out from the outer wall surface 87d and the vicinity thereof to the gap between the sliding surfaces 7a and 8a, thereby locally generating positive pressure, and locally generating negative pressure on the inner wall surface 87c and the vicinity thereof. The local positive pressure is slightly smaller than the local negative pressure.

In addition, as indicated by a thin black arrow, the fluid in the inner pressure generation groove 83 located in the substantially 9:30 o'clock direction moves from an inner wall surface 84c side toward an outer wall surface 84d side. Accordingly, the fluid in the back pressure chamber 50 is introduced from the inner diameter end 85a through the inner radial groove 85. As a result, positive pressure is generated in the inner pressure generation groove 83. Since the radial dimension D1 of the inner circumferential groove 84 is shorter than the circumferential dimension C2 of the outer circumferential groove 87 (D1 < C2), the generated positive pressure is smaller than the positive pressure generated in the substantially 12 o'clock direction.

In more detail, positive pressure is locally generated on the outer wall surface 84d and in the vicinity thereof, and negative pressure is locally generated on the inner wall surface 84c and in the vicinity thereof. The local negative pressure is slightly smaller than the local positive pressure.

In addition, as indicated by a thin black arrow, the fluid in the outer circumferential groove 87 of the outer pressure generation groove 86 located in a substantially 2:30 o'clock direction moves from the outer wall surface 87d side toward the inner wall surface 87c side. Accordingly, the fluid in the low-pressure chamber 20 is introduced from the outer diameter end 88a through the outer radial groove 88. As a result, positive pressure is generated in the outer pressure generation groove 86. Since the radial dimension D2 of the outer circumferential groove 87 is shorter than the circumferential dimension C2 of the outer circumferential groove 87 (D2 < C2), the generated positive pressure is significantly smaller than the positive pressure generated in the substantially 12 o'clock direction.

In more detail, positive pressure is locally generated on the inner wall surface 87c and in the vicinity thereof, and negative pressure is locally generated on the outer wall surface 87d and in the vicinity thereof.

In addition, as indicated by a thin black arrow, the fluid in the inner pressure generation groove 83 located in the substantially 2:30 o'clock direction moves from the outer wall surface 84d side toward the inner wall surface 84c side, and is discharged into the back pressure chamber 50 from the inner diameter end 85a through the inner radial groove 85. As a result, negative pressure is generated in the inner pressure generation groove 83. Since the radial dimension D1 of the inner circumferential groove 84 is shorter than the circumferential dimension C1 of the inner circumferential groove 84 (D1 < C1), the generated negative pressure is smaller than the negative pressure generated in the substantially 12 o'clock direction.

In more detail, positive pressure is locally generated on the inner wall surface 84c and in the vicinity thereof, and negative pressure is locally generated on the outer wall surface 84d and in the vicinity thereof.

In addition, as indicated by thin black arrows, the fluid in the inner pressure generation groove 83 located in the substantially 6 o'clock direction moves from the end 84b of the inner circumferential groove 84 on the counterclockwise side in the circumferential direction toward the end 84a on the clockwise side in the circumferential direction, and flows out from the end 84a and the vicinity thereof to the gap between the sliding surfaces 7a and 8a, thereby generating positive pressure. In addition, the fluid in the back pressure chamber 50 is introduced from the inner diameter end 85a of the inner radial groove 85.

Meanwhile, the orbiting component 7 does not overlap a portion 81a of the outer pressure generation region 81, which extends from the 9 o'clock position through a 6 o'clock position to the 3 o'clock position, in the axial direction. Particularly, almost the entirety of the outer pressure generation groove 86 located in the substantially 6 o'clock direction is exposed to the low-pressure chamber 20. In each of the outer pressure generation grooves 86 located in the portion 81a, dynamic pressure due to the relative sliding of the orbiting component 7 is not generated.

Accordingly, in the eccentric rotation state illustrated in FIG. 3, particularly at the substantially 6 o'clock position, only positive pressure is generated, so that between the sliding surfaces 7a and 8a, the separation force due to the positive pressure becomes larger than the suction force due to the negative pressure. Therefore, the sliding surface 7a can be separated from the sliding surface 8a.

In FIG. 4, as indicated by a thick black arrow, the orbiting component 7 has slid counterclockwise relative to the sliding surface 8a of the fixed component 8 from the state illustrated in FIG. 3. In this state, the orbiting component 7 overlaps the entirety of the inner pressure generation region 80 in the axial direction, and overlaps a portion of the outer pressure generation region 81, which extends from the 12 o'clock position through the 9 o'clock position to the 6 o'clock position, in the axial direction.

At this time, in the outer pressure generation groove 86 located in the substantially 9 o'clock direction, positive pressure is generated at the end 87b and in the vicinity thereof. Negative pressure is generated in the inner pressure generation groove 83 located in the substantially 9 o'clock direction.

In addition, negative pressure is generated in the outer pressure generation groove 86 located in a substantially 6:30 o'clock direction. Positive pressure is generated in the inner pressure generation groove 83 located in the substantially 6:30 o'clock direction. Positive pressure is generated in the outer pressure generation groove 86 located in a substantially 11:30 o'clock direction. Negative pressure is generated in the inner pressure generation groove 83 located in the substantially 11:30 o'clock direction. These positive pressures or negative pressures are significantly smaller than the positive pressure or negative pressure generated in the substantially 9 o'clock direction.

In addition, in the inner pressure generation groove 83 located in the substantially 3 o'clock direction, the fluid flows out from the end 84a and the vicinity thereof to the gap between the sliding surfaces 7a and 8a, thereby generating positive pressure.

Meanwhile, the orbiting component 7 does not overlap a portion 81b of the outer pressure generation region 81, which extends from the 6 o'clock position through the 3 o'clock position to the 12 o'clock position, in the axial direction. Particularly, almost the entirety of the outer pressure generation groove 86 located in the substantially 9 o'clock direction is exposed to the low-pressure chamber 20.

Accordingly, in the eccentric rotation state illustrated in FIG. 4, particularly at the substantially 3 o'clock position, only positive pressure is generated, so that between the sliding surfaces 7a and 8a, the separation force due to the positive pressure becomes larger than the suction force due to the negative pressure.

In FIG. 5, as indicated by a thick black arrow, the orbiting component 7 has slid counterclockwise relative to the sliding surface 8a of the fixed component 8 from the state illustrated in FIG. 4. In this state, the orbiting component 7 overlaps the entirety of the inner pressure generation region 80 in the axial direction, and overlaps a portion of the outer pressure generation region 81, which extends from the 9 o'clock position through the 6 o'clock position to the 3 o'clock position, in the axial direction.

At this time, in the outer pressure generation groove 86 located in the substantially 6 o'clock direction, positive pressure is generated at the end 87b and in the vicinity thereof. Negative pressure is generated in the inner pressure generation groove 83 located in the substantially 6 o'clock direction.

In addition, negative pressure is generated in the outer pressure generation groove 86 located in a substantially 3:30 o'clock direction. Positive pressure is generated in the inner pressure generation groove 83 located in the substantially 3:30 o'clock direction. Positive pressure is generated in the outer pressure generation groove 86 located in a substantially 8:30 o'clock direction. Negative pressure is generated in the inner pressure generation groove 83 located in the substantially 8:30 o'clock direction. These positive pressures or negative pressures are significantly smaller than the positive pressure or negative pressure generated in the substantially 6 o'clock direction.

In addition, in the inner pressure generation groove 83 located in the substantially 12 o'clock direction, the fluid flows out from the end 84a and the vicinity thereof to the gap between the sliding surfaces 7a and 8a, thereby generating positive pressure.

Meanwhile, the orbiting component 7 does not overlap a portion 81c of the outer pressure generation region 81, which extends from the 3 o'clock position through the 12 o'clock position to the 9 o'clock position, in the axial direction. Particularly, almost the entirety of the outer pressure generation groove 86 located in the substantially 12 o'clock direction is exposed to the low-pressure chamber 20.

Accordingly, in the eccentric rotation state illustrated in FIG. 5, particularly at the substantially 12 o'clock position, only positive pressure is generated, so that between the sliding surfaces 7a and 8a, the separation force due to the positive pressure becomes larger than the suction force due to the negative pressure.

In FIG. 6, as indicated by a thick black arrow, the orbiting component 7 has slid counterclockwise relative to the sliding surface 8a of the fixed component 8 from the state illustrated in FIG. 5. In this state, the orbiting component 7 overlaps the entirety of the inner pressure generation region 80 in the axial direction, and overlaps a portion of the outer pressure generation region 81, which extends from the 6 o'clock position through the 3 o'clock position to the 12 o'clock position, in the axial direction.

At this time, in the outer pressure generation groove 86 located in the substantially 3 o'clock direction, positive pressure is generated at the end 87b and in the vicinity thereof. Negative pressure is generated in the inner pressure generation groove 83 located in the substantially 3 o'clock direction.

In addition, negative pressure is generated in the outer pressure generation groove 86 located in a substantially 12:30 o'clock direction. Positive pressure is generated in the inner pressure generation groove 83 located in the substantially 12:30 o'clock direction. Positive pressure is generated in the outer pressure generation groove 86 located in a substantially 5:30 o'clock direction. Negative pressure is generated in the inner pressure generation groove 83 located in the substantially 5:30 o'clock direction. These positive pressures or negative pressures are significantly smaller than the positive pressure or negative pressure generated in the substantially 3 o'clock direction.

In addition, in the inner pressure generation groove 83 located in the substantially 9 o'clock direction, the fluid flows out from the end 84a and the vicinity thereof to the gap between the sliding surfaces 7a and 8a, thereby generating positive pressure.

Meanwhile, the orbiting component 7 does not overlap a portion 81c of the outer pressure generation region 81, which extends from the 12 o'clock position through the 9 o'clock position to the 6 o'clock position, in the axial direction. Particularly, almost the entirety of the outer pressure generation groove 86 located in the substantially 9 o'clock direction is exposed to the low-pressure chamber 20.

Accordingly, in the eccentric rotation state illustrated in FIG. 6, particularly at the substantially 9 o'clock position, only positive pressure is generated, so that between the sliding surfaces 7a and 8a, the separation force due to the positive pressure becomes larger than the suction force due to the negative pressure.

As described above, in the fixed component 8 of the present embodiment, during relative rotation, regardless of the eccentric angle, some of the outer pressure generation grooves 86 do not face the orbiting component 7 and are exposed to the low-pressure chamber 20 serving as an external space, and no negative pressure is generated in the outer pressure generation grooves 86. As a result, the orbiting component 7 can be separated by the pressure generated during relative rotation. Therefore, the fixed component 8 can stably reduce the frictional resistance of the sliding surface 8a that undergoes eccentric rotation.

In addition, in the fixed component 8, the inner pressure generation grooves 83 communicate with the back pressure chamber 50, and the outer pressure generation grooves 86 communicate with the low-pressure chamber 20. Therefore, the fixed component 8 can more efficiently generate pressure by utilizing the fluid in the back pressure chamber 50 or the low-pressure chamber 20.

Incidentally, in the present embodiment, the inner diameter end 85a of each of the inner pressure generation grooves 83 has been described as being configured to communicate with the back pressure chamber 50; however, the present invention is not limited thereto, and the inner diameter end 85a may be closed. Namely, it is sufficient for some of the inner pressure generation grooves to extend toward a back pressure chamber 50 side. With such a configuration as well, the fluid in the back pressure chamber 50 can be introduced by relative negative pressure generated in the vicinities of the inner diameter ends or the fluid can be discharged into the back pressure chamber 50 by positive pressure. From this point of view, it is preferable that the inner diameter ends that are closed and the back pressure chamber 50 are adjacent to each other, and it is preferable that the separation dimension between the inner diameter ends and the back pressure chamber 50 is less than the groove width of the inner pressure generation grooves 83. The same applies to the outer pressure generation grooves 86.

In addition, in the fixed component 8, as illustrated by the portions 81a to 81d, portions where no pressure is generated are formed in the outer pressure generation region 81 in the circumferential direction. According to this configuration, in the fixed component 8, portions where pressure is generated and portions where no pressure is generated can be provided in the outer pressure generation region 81 in the circumferential direction. Therefore, a substantially constant positive pressure can be stably generated between the sliding surfaces 7a and 8a regardless of the eccentric angle.

In addition, at any eccentric position, of the pressure generation regions overlapping the radial width R20e - R20i of the sliding surface 7a of the orbiting component 7 at a phase on the +L side and the radial width R20e - R20i of the sliding surface 7a of the orbiting component 7 at a phase on a -L side (namely, the opposite phase of +L), an area of the region where positive pressure is generated is larger than an area of the region where negative pressure is generated. Namely, a cross-sectional area of the pressure generation grooves that generate positive pressure is larger than a cross-sectional area of the pressure generation grooves that generate negative pressure. According to this configuration, positive pressure becomes dominant across the entirety of the sliding surface.

Incidentally, the phase on the -L side refers to the phase located in the substantially 6 o'clock direction in FIG. 3, and the phase on the +L side refers to the phase located in the substantially 12 o'clock direction in FIG. 3. Namely, the phase where a portion in which no pressure is generated exists is the phase on the -L side, and the phase opposite the phase on the -L side in the radial direction, namely, the phase located at the opposite pole is the phase on the +L side.

In addition, two pressure generation regions 80 and 81 are formed in the radial direction on the sliding surface 8a of the fixed component 8. As a result, positive pressure and negative pressure can be generated at any phase, and the entirety of the orbiting component 7 can be adjusted not to excessively tilt relative to the fixed component 8.

In addition, the inner pressure generation groove 83 and the outer pressure generation groove 86 are grooves extending in opposite directions. Specifically, the inner pressure generation groove 83 extends from a portion where the inner circumferential groove 84 thereof communicates with the inner radial groove 85 toward the clockwise side in the circumferential direction. The outer pressure generation groove 86 extends from a portion where the outer circumferential groove 87 thereof communicates with the outer radial groove 88 toward the counterclockwise side in the circumferential direction. According to this configuration, the fixed component 8 can generate positive pressure in the outer pressure generation groove 86 and relative negative pressure in the inner pressure generation groove 83 out of the inner pressure generation groove 83 and the outer pressure generation groove 86 adjacent to each other.

Therefore, the fixed component 8 in the present embodiment can reduce the occurrence of excessive tilt or leakage compared to when the inner pressure generation groove 83 and the outer pressure generation groove 86 are grooves extending in the same direction, in detail, when a direction in which the inner circumferential groove 84 extends from a portion where the inner circumferential groove 84 communicates with the inner radial groove 85 and a direction in which the outer circumferential groove 87 extends from a portion where the outer circumferential groove 87 communicates with the outer radial groove 88 are the same direction.

In addition, an amount of pressure generated in the outer pressure generation groove 86 having a larger volume than the inner pressure generation groove 83 is larger than an amount of pressure generated in the inner pressure generation groove 83. According to this configuration, the fixed component 8 can more reliably reduce the occurrence of excessive tilt or leakage while being reliably separated from the orbiting component 7.

In addition, compared to the inner pressure generation groove 83 that continues to slide relative to the sliding surface 7a during eccentric rotation of the orbiting component 7, the outer pressure generation groove 86 is separated from the sliding surface 7a, thereby making it easier for pressure to be released. Therefore, tilting relative to the orbiting component 7 due to a local increase in pressure or the like is prevented.

Furthermore, the outer pressure generation groove 86 is separated from the sliding surface 7a, thereby making it easy for dust and the like, which has flowed into the inside, to be discharged into the low-pressure chamber 20.

In addition, since the fixed component 8 of the present embodiment is configured such that portions where no pressure is generated are formed in the outer pressure generation region 81 in the circumferential direction, it is easy to secure a region for forming the pressure generation grooves compared to a configuration in which portions where no pressure is generated are formed in the inner pressure generation region 80 in the circumferential direction as in a third embodiment to be described later. Therefore, it is easy to make an amount of pressure generated in the outer pressure generation region 81 larger than an amount of pressure generated in the inner pressure generation region 80.

In addition, in the fixed component 8, since the inner pressure generation region 80 and the outer pressure generation region 81 are partitioned off from each other by the intermediate land portion 89, excessive flow of the fluid from the back pressure chamber 50 into the low-pressure chamber 20 is suppressed by a pressure difference between the back pressure chamber 50 and the low-pressure chamber 20.

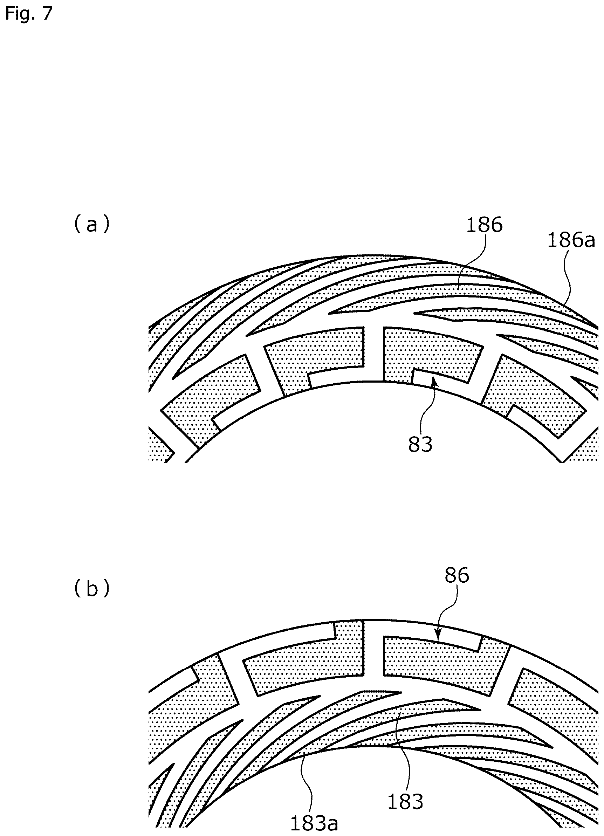

Incidentally, in the present embodiment, both the inner pressure generation groove 83 and the outer pressure generation groove 86 have been described as being configured as L-shaped grooves; however, the present invention is not limited thereto, and the shapes of the grooves may be changed as appropriate. For example, referring to FIG. 7A illustrating a modification example, the inner pressure generation groove 83 is the same as that of the present embodiment, whereas an outer pressure generation groove 186 may be a so-called spiral groove that extends from an outer diameter end 186a toward the inner diameter side while being inclined to the counterclockwise side in the circumferential direction.

In addition, referring to FIG. 7B illustrating another modification example, the outer pressure generation groove 86 is the same as that of the present embodiment, whereas an inner pressure generation groove 183 may extend from an inner diameter end 183a toward the outer diameter side while being inclined to the clockwise side in the circumferential direction.

### {Second embodiment}

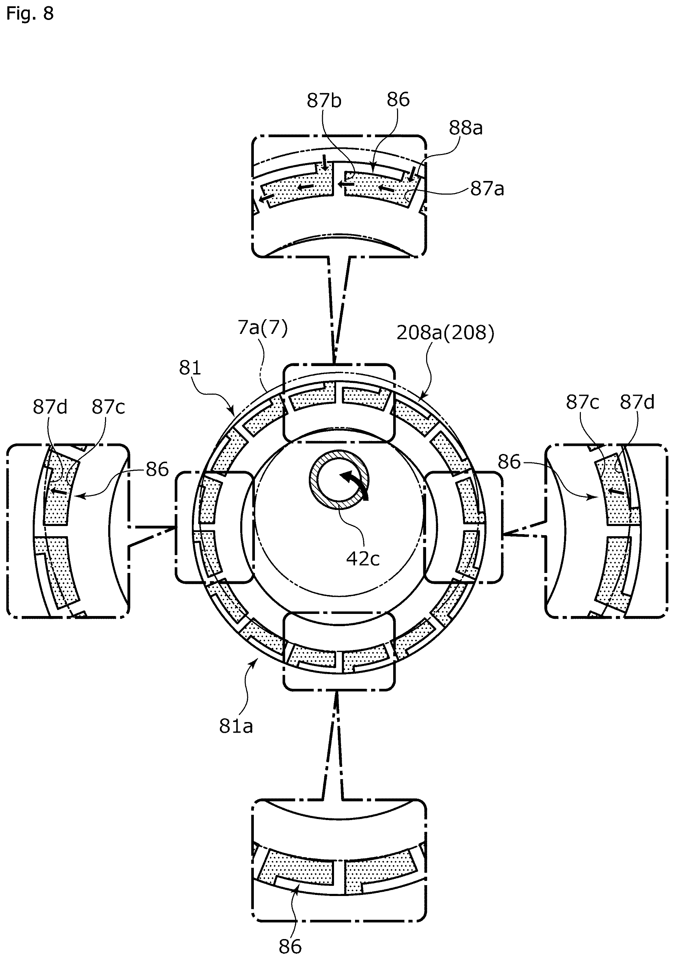

Next, sliding components according to a second embodiment of the present invention will be described with reference to FIG. 8. Incidentally, the description of configurations that are the same as and overlap with the configurations of the first embodiment will be omitted.

In the second embodiment, the outer pressure generation region 81 is formed on a sliding surface 208a of a fixed component 208, and the other portion is a land forming a flat surface.

With such a configuration as well, the fixed component 208 in the present embodiment can separate the orbiting component 7 using pressure generated during relative rotation. Therefore, the fixed component 208 can stably reduce the frictional resistance of the sliding surface 208a that undergoes eccentric rotation.

In addition, in the fixed component 208, the outer pressure generation grooves 86 communicate with the low-pressure chamber 20. Therefore, the fixed component 208 can efficiently generate pressure by utilizing the fluid in the low-pressure chamber 20.

In addition, in the fixed component 208, as illustrated by the portion 81a, portions where no pressure is generated are formed in the outer pressure generation region 81 in the circumferential direction. According to this configuration, in the fixed component 208, portions where pressure is generated and portions where no pressure is generated can be provided in the outer pressure generation region 81 in the circumferential direction. Therefore, a substantially constant positive pressure can be stably generated between the sliding surfaces 7a and 8a regardless of the eccentric angle.

Furthermore, the fixed component 208 can suppress the occurrence of leakage due to excessive separation of the orbiting component 7 caused by the generation of excessive positive pressure.

As in the present embodiment, as long as the pressure generation region includes pressure generation grooves capable of generating positive pressure according to the eccentric rotation direction, the pressure generation region may not be formed on each of the inner diameter side and the outer diameter side as in the first embodiment, but may be formed on only one side or may be formed at the radial center, and the position of the pressure generation region may be changed as appropriate.

### {Third embodiment}

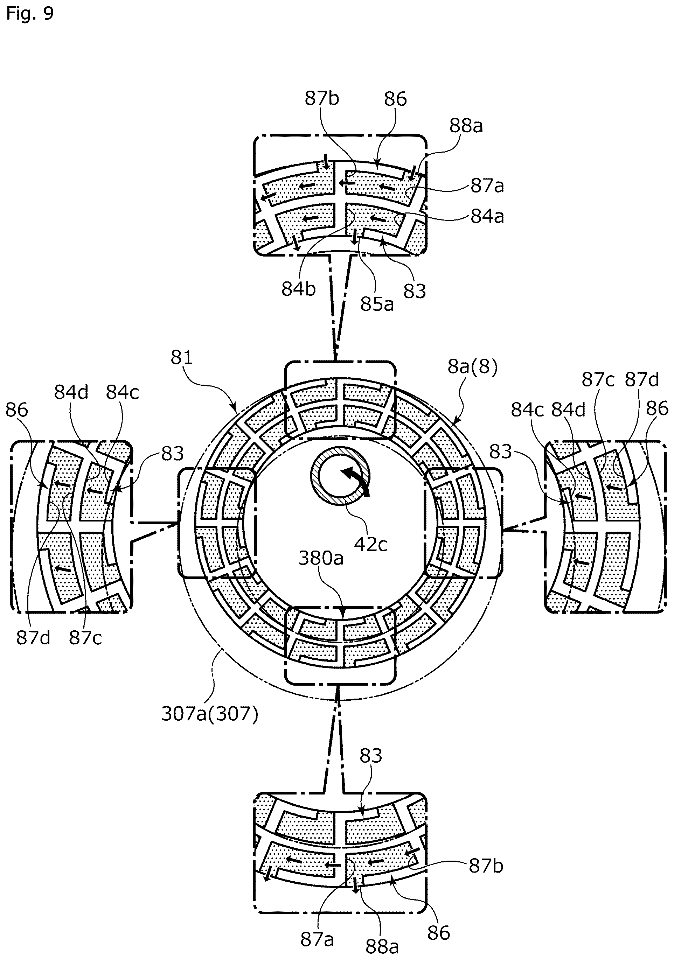

Next, sliding components according to a third embodiment of the present invention will be described with reference to FIG. 9. Incidentally, the description of configurations that are the same as and overlap with the configurations of the first embodiment will be omitted.

The fixed component 8 according to the third embodiment has a smaller outer diameter than an orbiting component 307 and substantially the same inner diameter as the orbiting component 307. Therefore, as illustrated by a portion 380a, portions where no pressure is generated are formed in the inner pressure generation region 80 in the circumferential direction.

According to this configuration, the fluid can be made even less likely to leak from the back pressure chamber 50 that is at high pressure to the low-pressure chamber 20 that is at low pressure by reducing the difference between the separation force due to positive pressure and the suction force due to negative pressure between the sliding surfaces 307a and 8a. As a result, the fixed component 8 can more reliably prevent leakage from the back pressure chamber 50 to the low-pressure chamber 20 while separating the orbiting component 307 using pressure generated during relative rotation.

Incidentally, when the eccentric rotation direction of the orbiting component 307 is a reverse direction, in the configuration of the present embodiment, the separation force due to positive pressure becomes larger than the suction force due to negative pressure. In other words, when the eccentric rotation direction of the orbiting component 7 in the first embodiment is a reverse direction, the difference between the separation force due to positive pressure and the suction force due to negative pressure can be reduced.

In addition, in addition to the configuration of the third embodiment, when a configuration in which the inner circumferential groove extends from the inner radial groove toward the counterclockwise side in the circumferential direction and the outer circumferential groove extends from the outer radial groove toward the clockwise side in the circumferential direction is implemented, the separation force due to positive pressure becomes larger than the suction force due to negative pressure. In other words, in addition to the configuration of the first embodiment, when a configuration in which the inner circumferential groove extends from the inner radial groove toward the counterclockwise side in the circumferential direction and the outer circumferential groove extends from the outer radial groove toward the clockwise side in the circumferential direction is implemented, the difference between the separation force due to positive pressure and the suction force due to negative pressure can be reduced.

As described above, as long as the inner pressure generation groove and the outer pressure generation groove are configured to be adjacent to each other at any phase on the sliding surface, whether to expose the inner pressure generation groove or the outer pressure generation groove may be changed as appropriate.

As described above, the pressure generation region where no pressure is generated may be the inner pressure generation region or the outer pressure generation region. Preferably, the region where positive pressure is generated is larger than the region where negative pressure is generated across the entirety of the sliding surface, specifically, the area of the region where positive pressure is generated is larger than the area of the region where negative pressure is generated, on a straight line passing through two centers of the fixed component and the orbiting component, namely, each center on a sliding surface formed due to the fixed component and the orbiting component facing each other. With such a configuration, the separation force due to positive pressure becomes dominant across the entirety of the sliding surface, so that the frictional force of the sliding surface can be reduced and slidability can be improved.

### {Fourth embodiment}

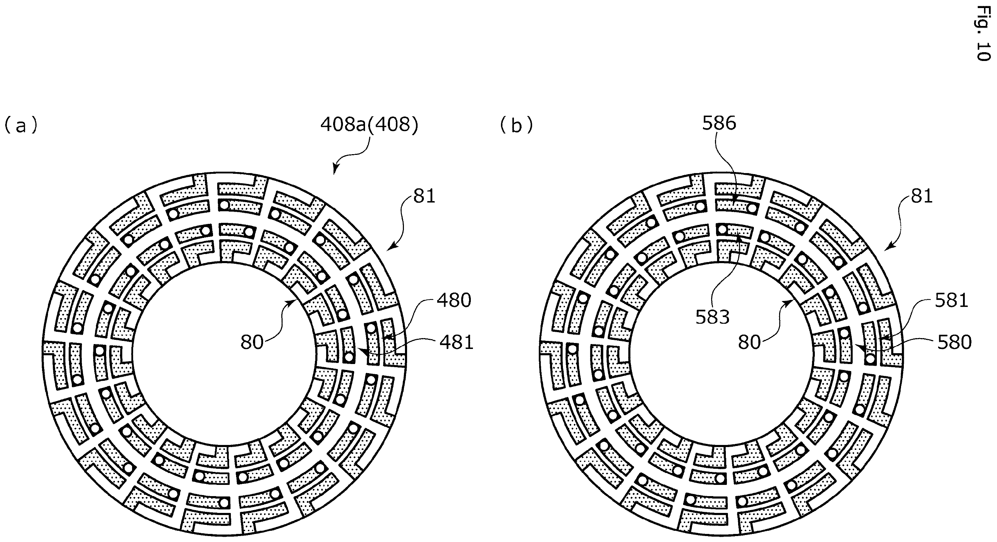

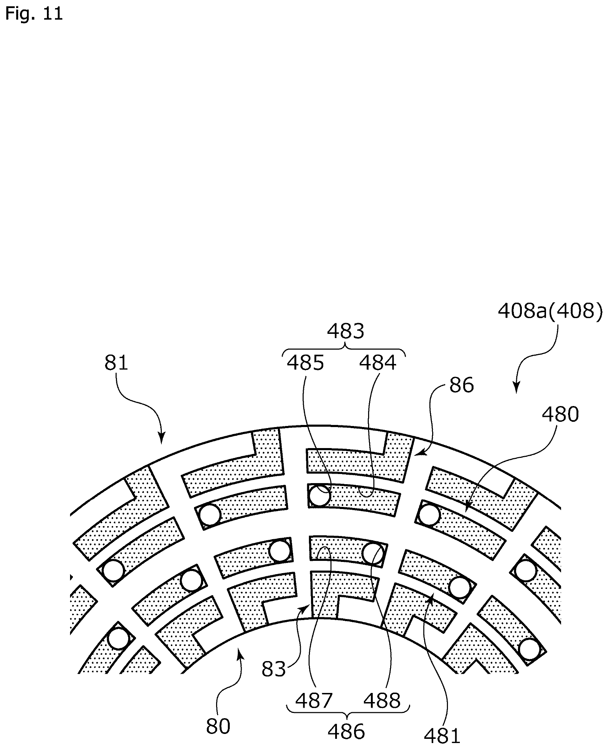

Next, sliding components according to a fourth embodiment of the present invention will be described with reference to FIGS. 10 and 11. Incidentally, the description of configurations that are the same as and overlap with the configurations of the first embodiment will be omitted.

As illustrated in FIG. 10A, on a sliding surface 408a of a fixed component 408 in the fourth embodiment, two intermediate pressure generation regions 480 and 481 are provided between the inner pressure generation region 80 and the outer pressure generation region 81, and a land is provided between each adjacent pair of the pressure generation regions 80, 481, 480, and 81.

As illustrated in FIG. 11, the outer intermediate pressure generation region 480 disposed on the outer side is composed of a plurality of outer intermediate pressure generation mechanisms 483. Each of the outer intermediate pressure generation mechanisms 483 is composed of a through-hole 485 and an outer intermediate circumferential groove 484 extending from the through-hole 485 toward one side.

The inner intermediate pressure generation region 481 disposed on the inner side is composed of a plurality of inner intermediate pressure generation mechanisms 486. Each of the inner intermediate pressure generation mechanisms 486 includes a through-hole 488 and an inner intermediate circumferential groove 487 extending from the through-hole 488 toward the other side in the circumferential direction.

With such a configuration, when negative pressure is generated in the inner pressure generation groove 83 and positive pressure is generated in the outer pressure generation groove 86 as in the substantially 12 o'clock direction in FIG. 3 of the first embodiment, in the inner intermediate pressure generation mechanism 486, positive pressure is generated at an end portion of the inner intermediate circumferential groove 487 on the side opposite the through-hole 488. In addition, in the outer intermediate pressure generation mechanism 483, negative pressure is generated at an end portion of the outer intermediate circumferential groove 484 on the side opposite the through-hole 485. Namely, regions where positive pressure is generated and regions where negative pressure is generated are alternately disposed in the radial direction.

Incidentally, as illustrated in FIG. 10B, an inner intermediate pressure generation region 580 having the same function as the outer intermediate pressure generation region 480 described above may be provided on the outer diameter side of the inner pressure generation region 80, and an outer intermediate pressure generation region 581 having the same function as the inner intermediate pressure generation region 481 described above may be provided on the outer diameter side of the inner intermediate pressure generation region 580.

In more detail, the inner intermediate pressure generation region 580 is composed of a plurality of inner intermediate pressure generation mechanisms 583 having substantially the same shape as the outer intermediate pressure generation mechanisms 483 described above. The outer intermediate pressure generation region 581 is composed of a plurality of outer intermediate pressure generation mechanisms 586 having substantially the same shape as the inner intermediate pressure generation mechanisms 486 described above.

As described above, as long as the area of the region where positive pressure is generated is larger than the area of the region where negative pressure is generated, on a straight line passing through the two centers of the fixed component and the orbiting component on the sliding surface formed due to the fixed component and the orbiting component facing each other, the number and disposition of the pressure generation regions may be changed as appropriate.

### {Fifth embodiment}

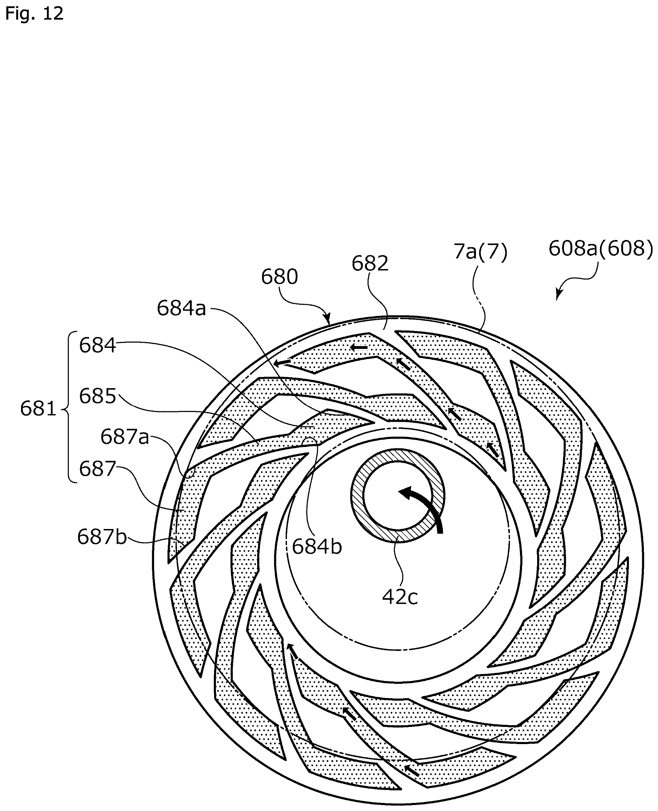

Next, sliding components according to a fifth embodiment of the present invention will be described with reference to FIG. 12. Incidentally, the description of configurations that are the same as and overlap with the configurations of the first embodiment will be omitted.

As illustrated in FIG. 12, a sliding surface 608a of a fixed component 608 in the fifth embodiment is composed of a pressure generation region 680 and a land 682.

The pressure generation region 680 is composed of 12 pressure generation grooves 681 evenly spaced apart in the circumferential direction, and the land 682 that is continuous with outer edges of the pressure generation grooves 681.

Each of the pressure generation grooves 681 is a groove having a substantially constant depth and a substantially Z-shape, and including an inner circumferential groove 684, a communication groove 685, and an outer circumferential groove 687.

An end 684a of the inner circumferential groove 684 on the clockwise side in the circumferential direction is closed, and an end 684b of the inner circumferential groove 684 on the counterclockwise side in the circumferential direction communicates with the communication groove 685. The communication groove 685 is a linear groove extending from the inner diameter side toward the outer diameter side of the sliding surface 608a while being inclined in the circumferential counterclockwise direction. An end 687a of the outer circumferential groove 687 on the clockwise side in the circumferential direction communicates with the communication groove 685, and an end 687b of the outer circumferential groove 687 on the counterclockwise side in the circumferential direction is closed.

Next, dynamic pressure generated between the sliding surfaces 7a and 608a will be described by illustrating a state where the boss 42c has reached the substantially 12 o'clock direction as indicated by a thick black arrow in FIG. 12.

In FIG. 12, all the inner circumferential grooves 684 overlap the orbiting component 7 in the axial direction. In addition, the outer circumferential grooves 687 located from a 2 o'clock position through the 12 o'clock position to a 10 o'clock position overlap the orbiting component 7 in the axial direction. Meanwhile, the outer circumferential grooves 687 located from a 9:30 o'clock position through the 6 o'clock position to a 2:30 o'clock position do not overlap the orbiting component 7 in the axial direction.

At this time, as indicated by thin black arrows, the fluid in the pressure generation groove 681 located in the substantially 12 o'clock direction moves from the end 687a of the outer circumferential groove 687 on the clockwise side in the circumferential direction toward the end 687b on the counterclockwise side in the circumferential direction, and flows out from the corner of the end 687b and the vicinity thereof to a gap between the sliding surfaces 7a and 608a, thereby generating positive pressure.

In addition, the fluid in the inner circumferential groove 684 is introduced into the outer circumferential groove 687 through the communication groove 685. Relative negative pressure is generated in the inner circumferential groove 684. The negative pressure increases as the end 684a on the clockwise side in the circumferential direction is approached.

At this time, as indicated by thin black arrows, the fluid in the pressure generation groove 681 located in the substantially 6 o'clock direction moves from the end 684b of the inner circumferential groove 684 on the counterclockwise side in the circumferential direction toward the end 684a on the clockwise side in the circumferential direction, and flows out from the corner of the end 684a and the vicinity thereof to the gap between the sliding surfaces 7a and 608a, thereby generating positive pressure.

In addition, in the pressure generation groove 681 located in the substantially 6 o'clock direction, a part of the communication groove 685 and the outer circumferential groove 687 are exposed to the low-pressure chamber 20. As a result, the fluid in the low-pressure chamber 20 is easily drawn into the inner circumferential groove 684 through the communication groove 685. Therefore, the pressure generation groove 681 can efficiently generate pressure.

Furthermore, since the outer circumferential groove 687 extends in the circumferential direction and has a large volume, the outer circumferential groove 687 is exposed to the low-pressure chamber 20, so that the refrigerant is easily stored therein. As a result, the inner circumferential groove 684 more easily draws in the fluid in the low-pressure chamber 20.

In addition, the locations where dynamic pressure is generated, namely, the pressure generation grooves 681 are sequentially displaced substantially counterclockwise in response to the eccentric rotation of the orbiting component 7.

In such a manner, the fixed component 608 in the present embodiment can separate the orbiting component 7 using pressure generated during relative rotation. Therefore, the fixed component 608 can stably reduce the frictional resistance of the sliding surface 608a that undergoes eccentric rotation.

In addition, since the pressure generation grooves 681 do not communicate with the back pressure chamber 50, the fixed component 608 can more reliably prevent leakage from the back pressure chamber 50 to the low-pressure chamber 20.

In addition, when the movable scroll 42 is stationary, namely, in a non-rotating state, some of the pressure generation grooves 681 such as the outer circumferential grooves 687 located from the 9:30 o'clock position through the 6 o'clock position to the 2:30 o'clock position illustrated in FIG. 12 are partially exposed to the low-pressure chamber 20, so that the refrigerant is easily stored therein. As a result, dynamic pressure can be efficiently generated even immediately after the movable scroll 42 starts rotating eccentrically.

### {Sixth embodiment}

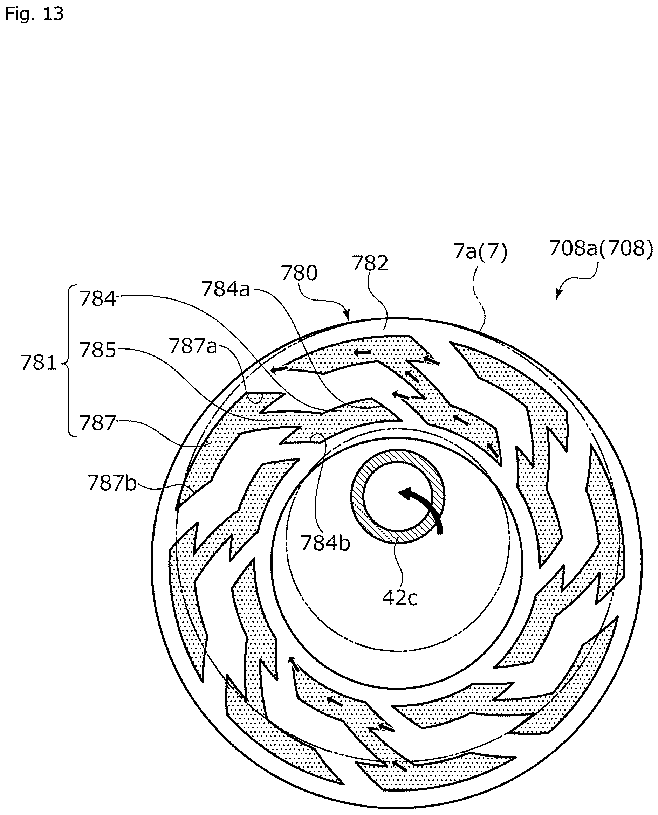

Next, sliding components according to a sixth embodiment of the present invention will be described with reference to FIG. 13. Incidentally, the description of configurations that are the same as and overlap with the configurations of the first embodiment will be omitted.

As illustrated in FIG. 13, a sliding surface 708a of a fixed component 708 in the sixth embodiment is composed of a pressure generation region 780 and a land 782.

The pressure generation region 780 is composed of eight pressure generation grooves 781 evenly spaced apart in the circumferential direction, and the land 782 that is continuous with outer edges of the pressure generation grooves 781.

Each of the pressure generation grooves 781 is a groove having a substantially constant depth and a substantially H-shape, and including an inner circumferential groove 784, a communication groove 785, and an outer circumferential groove 787.

An end 784a of the inner circumferential groove 784 on the clockwise side in the circumferential direction and an end 784b thereof on the counterclockwise side in the circumferential direction are closed. In addition, a portion of the inner circumferential groove 784 that is closer to a circumferential center of the inner circumferential groove 784 than the end 784b on the counterclockwise side in the circumferential direction communicates with the communication groove 785. The communication groove 785 is a linear groove extending from the inner diameter side toward the outer diameter side of the sliding surface 708a while being inclined in the circumferential counterclockwise direction. An end 787a of the outer circumferential groove 787 on the clockwise side in the circumferential direction and an end 787b thereof on the counterclockwise side in the circumferential direction are closed. In addition, a portion of the outer circumferential groove 787 that is closer to a circumferential center of the outer circumferential groove 787 than the end 787a on the clockwise side in the circumferential direction communicates with the communication groove 785.

Next, dynamic pressure generated between the sliding surfaces 7a and 708a will be described by illustrating a state where the boss 42c has reached the substantially 12 o'clock direction as indicated by a thick black arrow in FIG. 13.

In FIG. 13, all the inner circumferential grooves 784 overlap the orbiting component 7 in the axial direction. In addition, the outer circumferential groove 787 located at the 12 o'clock position overlaps the orbiting component 7 in the axial direction. Meanwhile, the outer circumferential grooves 787 located from a 10:30 o'clock position through the 6 o'clock position to the 2:30 o'clock position do not overlap the orbiting component 7 in the axial direction.

At this time, as indicated by thin black arrows, the fluid in the pressure generation groove 781 located in the substantially 12 o'clock direction moves from the end 787a of the outer circumferential groove 787 on the clockwise side in the circumferential direction toward the end 787b on the counterclockwise side in the circumferential direction, and flows out from the corner of the end 787b and the vicinity thereof to a gap between the sliding surfaces 7a and 708a, thereby generating positive pressure. Meanwhile, relative negative pressure is generated on an end 787a side.

In addition, the fluid in the inner circumferential groove 784 moves from the end 784a of the inner circumferential groove 784 on the clockwise side in the circumferential direction toward the end 784b on the counterclockwise side in the circumferential direction, and flows out from the corner of the end 784b and the vicinity thereof to the gap between the sliding surfaces 7a and 708a, thereby generating positive pressure. In addition, the fluid in the inner circumferential groove 784 is introduced into the outer circumferential groove 787 through the communication groove 785. As a result, in the inner circumferential groove 784, a relatively large negative pressure is generated as the end 784a on the clockwise side in the circumferential direction is approached.

In addition, an amount of the fluid introduced to an end 787b side of the outer circumferential groove 787 on the counterclockwise side in the circumferential direction is larger than an amount of the fluid introduced to an end 784b side of the inner circumferential groove 784 on the counterclockwise side in the circumferential direction. Therefore, the positive pressure generated on the end 787b side is larger than the positive pressure generated on the end 784b side.

In addition, an amount of the fluid flowing through the inner circumferential groove 784 from the end 784a side of the groove 784 on the clockwise side in the circumferential direction is larger than an amount of the fluid flowing through the outer circumferential groove 787 from the end 787a side of the groove 787 on the clockwise side in the circumferential direction. Therefore, the relative negative pressure generated on the end 784a side is larger than the relative negative pressure generated on the end 787a side.

As indicated by thin black arrows, the fluid in the pressure generation groove 781 located in the substantially 6 o'clock direction moves from the end 784b of the inner circumferential groove 784 on the counterclockwise side in the circumferential direction toward the end 784a on the clockwise side in the circumferential direction, and flows out from the corner of the end 784a and the vicinity thereof to the gap between the sliding surfaces 7a and 708a, thereby generating positive pressure. Meanwhile, relative negative pressure is generated on the end 784b side.

In addition, in the pressure generation groove 781 located in the substantially 6 o'clock direction, a part of the communication groove 785 and the outer circumferential groove 787 are exposed to the low-pressure chamber 20. As a result, the fluid in the low-pressure chamber 20 is easily drawn into the inner circumferential groove 784 through the communication groove 785. Therefore, the pressure generation groove 781 can efficiently generate pressure.

Furthermore, since the outer circumferential groove 787 extends in the circumferential direction and has a large volume, the outer circumferential groove 787 is exposed to the low-pressure chamber 20, so that the refrigerant is easily stored therein. As a result, the inner circumferential groove 784 more easily draws in the fluid in the low-pressure chamber 20.

In addition, the locations where dynamic pressure is generated, namely, the pressure generation grooves 781 are sequentially displaced substantially counterclockwise in response to the eccentric rotation of the orbiting component 7.

In such a manner, the fixed component 708 in the present embodiment can separate the orbiting component 7 using pressure generated during relative rotation. Therefore, the fixed component 708 can stably reduce the frictional resistance of the sliding surface 708a that undergoes eccentric rotation.

In addition, when positive pressure is generated in the outer circumferential groove 787 or the inner circumferential groove 784, negative pressure can be generated on an opposite side of the same groove in the circumferential direction.

In addition, since the pressure generation grooves 781 do not communicate with the back pressure chamber 50, the fixed component 708 can more reliably prevent leakage from the back pressure chamber 50 to the low-pressure chamber 20.

In addition, when the movable scroll 42 is stationary, namely, in a non-rotating state, some of the pressure generation grooves 781 such as the outer circumferential grooves 787 located from the 10:30 o'clock position through the 6 o'clock position to the 2:30 o'clock position illustrated in FIG. 13 are partially exposed to the low-pressure chamber 20, so that the refrigerant is easily stored therein. As a result, dynamic pressure can be efficiently generated even immediately after the movable scroll 42 starts rotating eccentrically.

The embodiments of the present invention have been described above with reference to the drawings; however, the specific configurations are not limited to these embodiments, and modifications or additions that are made without departing from the scope of the present invention are also included in the present invention.

For example, in the first to sixth embodiments, the pressure generation region has been described as being provided in the fixed component; however, the present invention is not limited thereto, and the pressure generation region may be provided in the orbiting component.

In addition, as long as the orbiting component is configured to come into sliding contact with a member other than the fixed component, such as an inner casing, the pressure generation region may be provided on the side of the member including a sliding surface with which the orbiting component comes into sliding contact.

In addition, in the first to sixth embodiments, the fixed component has been described as being configured to come into sliding contact with the orbiting component; however, the present invention is not limited thereto, and the fixed component may come into direct sliding contact with the back surface of the movable scroll, and the mating sliding surface may be changed as appropriate.

In addition, in the first to sixth embodiments, a plurality of the pressure generation grooves constituting the pressure generation region have been described as being evenly spaced apart from each other; however, the present invention is not limited thereto, and the number or disposition of the pressure generation grooves may be changed as appropriate as long as one more pressure generation grooves are provided.

In addition, in the first to sixth embodiments, in order to form portions, in which no pressure is generated, in the circumferential direction in various pressure generation regions, a configuration in which the outer diameters, the inner diameters, the radial widths, or the like of the sliding surface of the fixed component and the sliding surface of the orbiting component are made different from each other or a configuration in which the radial dimension of the pressure generation region at any phase is set to any value is illustrated; however, the present invention is not limited thereto, and a part of the orbiting component may be cut out to form a deep groove in which no dynamic pressure is generated, and the location may be used as a portion where no pressure is generated, and the configuration may be changed as appropriate.

In addition, in the first to sixth embodiments, the volume of the outer pressure generation groove has been described as being larger than the volume of the inner pressure generation groove; however, the present invention is not limited thereto, the volume of the outer pressure generation groove and the volume of the inner pressure generation groove may be substantially the same or the volume of the inner pressure generation groove may be larger than the volume of the outer pressure generation groove, and these volumes may be changed as appropriate.

In addition, in the first to sixth embodiments, a mode in which the sliding components are applied to a scroll compressor used in air conditioning systems for automobiles and the like has been described; however, the present invention is not limited thereto, and the sliding components may be applied to, for example, a scroll expander-compressor or the like in which an expander and a compressor are integrally provided, as long as the scroll expander-compressor is a rotating machine including an eccentric mechanism.

In addition, in the first to sixth embodiments, the fluids existing in the spaces inside and outside the sliding surface of the fixed component may be any of gas, liquid, and a mixture of gas and liquid. Furthermore, the fluid in the inner diameter space may be at low pressure and the fluid in the outer diameter space may be at high pressure, or the fluid in the inner diameter space and the fluid in the outer diameter space may be at substantially the same pressure, and the pressures may be changed as appropriate.

In addition, in the first to sixth embodiments, the sliding components has been described as a thrust bearing in which the orbiting component and the fixed component receive a load, but may be used as a seal member that seals the fluid in the internal space and the fluid in the external space.

In addition, in the first to sixth embodiments, the orbiting component and the fixed component having the sliding surfaces that slide relative to each other have been described as being made of resin and metal, respectively; however, the materials of the sliding components may be freely selected depending on the usage environment or the like.

### {REFERENCE SIGNS LIST}

- 4: Scroll compression mechanism
- 7: Orbiting component
- 8: Fixed component
- 8a: Sliding surface
- 41: Fixed scroll
- 42: Movable scroll
- 80: Inner pressure generation region
- 81: Outer pressure generation region
- 83: Inner pressure generation groove
- 86: Outer pressure generation groove
- 89: Intermediate land portion
- 183: Inner pressure generation groove
- 186: Outer pressure generation groove
- 208: Fixed component
- 208a: Sliding surface
- 307: Orbiting component
- 408: Fixed component
- 408a: Sliding surface
- 480: Outer intermediate pressure generation region
- 481: Inner intermediate pressure generation region
- 483: Outer intermediate pressure generation mechanism
- 486: Inner intermediate pressure generation mechanism
- 580: Inner intermediate pressure generation region
- 581: Outer intermediate pressure generation region
- 583: Inner intermediate pressure generation mechanism
- 586: Outer intermediate pressure generation mechanism
- 608, 708: Fixed component
- 608a, 708a: Sliding surface
- 680, 780: Pressure generation region
- 681, 781: Pressure generation groove
- C: Scroll compressor
- L: Eccentricity (relative movement amount of sliding component in radial direction)

## Claims

1. Sliding components consisting of a fixed component and an orbiting component which have sliding surfaces that slide relative to each other as the sliding surfaces undergo eccentric rotation,
wherein at least one of the sliding surface of the fixed component and the sliding surface of the orbiting component has at least one pressure generation region where pressure is generated during relative rotation due to the eccentric rotation.

2. The sliding components according to claim 1,
wherein the pressure generation region is formed by pressure generation grooves disposed at distances from each other in a circumferential direction.

3. The sliding components according to claim 2,
wherein an area of the pressure generation groove that generates positive pressure is larger than an area of the pressure generation groove that generates negative pressure, on a straight line passing through two centers of the fixed component and the orbiting component at a location where two sliding surfaces overlap each other.

4. The sliding components according to claim 2,
wherein a plurality of the pressure generation regions are formed in a radial direction.

5. The sliding components according to claim 2,
wherein the pressure generation region includes the pressure generation groove communicating with an inner diameter space, and the pressure generation groove communicating with an outer diameter space.

6. The sliding components according to claim 5,
wherein the pressure generation groove communicating with the inner diameter space extends in a direction opposite the pressure generation groove, which communicates with the outer diameter space, in the circumferential direction.

7. The sliding components according to claim 5,
wherein the pressure generation groove communicating with the inner diameter space and the pressure generation groove communicating with the outer diameter space generate different amounts of pressure.
